# EUROPEAN PATENT SPECIFICATION

(11) **EP 3 654 279 B1**
(45) Date of publication and mention of the grant of the patent: **22.07.2026**
(21) Application number: 18831870.3
(22) Date of filing: 28.05.2018
(51) Int. Cl.: G06Q 10/20, G06V 20/20

(54) **OBJECT IDENTIFICATION SYSTEM**
OBJEKTIDENTIFIKATIONSSYSTEM
SYSTÈME D'IDENTIFICATION D'OBJET

(30) Priority: 13.07.2017 JP 2017137263
(43) Date of publication of application: 20.05.2020
(73) Proprietor: Yanmar Power Technology Co., Ltd., Osaka City (JP)
(72) Inventor: NAKAMURA, Keiji, Osaka-shi Osaka 532-0003 (JP); SHINKUMA, Akihiro, Osaka-shi Osaka 530-8311 (JP)
(74) Representative: Poindron, Cyrille
(86) International application number: PCT/JP2018/020418
(87) International publication number: WO 2019/012823

(56) References cited:
- EP-A1- 1 622 081
- EP-A1- 2 955 697
- WO-A1-2004/095374
- WO-A1-2013/035758
- JP-A- 2012 043 396
- JP-A- 2013 534 342
- JP-A- 2016 004 292
- JP-A- 2017 111 670
- US-A1- 2012 040 612
- US-A1- 2016 046 300
- US-A1- 2017 124 776

## Description

### Technical Field

The present invention relates to an object identification system.

### Background Art

Patent Literature 1 (hereinafter, referred to as PTL 1) discloses an object identification system including a terminal device with a camera and a server communicable with the terminal device. Specifically, the terminal device transmits an image (input image) captured by the camera to the server. The server extracts a feature quantity from the image received from the terminal device, and compares the extracted feature quantity with a first feature quantity dictionary to identify an object in the received image. Thereafter, in accordance with the result of the identification, the server obtains a second feature quantity dictionary and additional information that are to be supplied to the terminal device. Then, the server transmits the second feature quantity dictionary and the additional information to the terminal device. The quantity of data included in the second feature quantity dictionary is smaller than that of the first feature quantity dictionary.

The terminal device extracts a feature quantity from an input image, and compares the extracted feature quantity with the second feature quantity dictionary obtained from the server. In this manner, the terminal device identifies an object in the input image. Next, the terminal device obtains additional information related to the identified object from an additional information database obtained from the server, and superimposes the obtained additional information on the input image, so as to generate an output image. Then, the terminal device displays the output image on a display unit.

### Citation List

### Patent Literature

PTL 1: Japanese Patent Application Laid-Open No. 2015-212967

### Summary of Invention

### Technical Problem

US2016046300A1 relates to a shared vehicle system. According to the object identification system of PTL 1, the terminal device compares a feature quantity of an input image with the second feature quantity dictionary obtained from the server to identify an object in the input image. However, if there exists a plurality of vehicles of the same model, e.g., a plurality of work vehicles, it is difficult to identify a work vehicle at an individual level based on a feature quantity of the work vehicle in an input image.

The present invention has an object to provide an object identification system capable of identifying an identification target at an individual level by capturing an image of the identification target with a terminal device, even in a case where there exists a plurality of identification objects including two or more identification objects having the identical feature information.

### Solution to Problem and Advantageous Effects of Invention

An object identification system of the present invention includes:
a terminal device capable of capturing an image of an identification target that is an identification object to be identified from among identification objects respectively having pieces of feature information whose images are capturable externally; and
a server communicable with the terminal device, wherein
the terminal device includes
   a detecting unit configured to detect terminal position information including information indicating a position and an orientation of the terminal device,
   an image capturing unit configured to capture an image of the identification target, and
   a terminal-side identification control unit configured to extract feature information of the identification target from the image captured by the image capturing unit, and to transmit, to the server, identification and judgment information including the feature information thus extracted and the terminal position information, and
the server includes
   a memory unit in which pieces of feature information and pieces of position information of the identification objects are stored respectively in association with the identification objects, and
   a server-side identification control unit configured to determine a search area based on the terminal position information included in the identification and judgment information received from the terminal device, to search for a predetermined identification object satisfying a condition of existing within the search area thus determined and having feature information identical to the feature information included in the identification and judgment information, and to identify, when a predetermined identification satisfying the condition is found as a result of the search, the predetermined identification as the identification target.

The identification object refers to an object that can be a target to be identified by the object identification system of the present invention. The identification target refers to, among the identification objects, a target to be identified distinctively from the others.

With this configuration, an image of an identification target is captured by the image capturing unit of the terminal device, and feature information of the identification target is extracted therefrom. Then, identification and judgment information including the feature information of the identification target and the terminal position information is transmitted to the server. The server determines a search area based on the terminal position information, and searches for an identification object satisfying a condition of existing within the search area thus determined and having feature information identical to the feature information included in the identification and judgment information (i.e., the feature information of the identification target). If the identification object satisfying the condition is found, the identification object is identified as the identification target. Thus, even in a case where there exist identification objects including two or more identification objects having the identical feature information, it is possible to identify an identification target at an individual level by capturing an image of the identification target with the terminal device.

According to an embodiment of the present invention, in a case where there exist two or more predetermined identification objects satisfying the condition, the server-side identification control unit identifies, as the identification target, one of the predetermined identification objects located closer to the terminal device than any other predetermined identification objects.

With this configuration, even in a case where the captured image includes a plurality of identification objects having feature information identical to the feature information of the identification target, it is possible to identify the identification target.

According to an embodiment of the present invention, in the memory unit, pieces of feature information, pieces of position information, and pieces of individual information of the identification objects are stored respectively in association with the identification objects, and in a case where the server-side identification control unit identifies the predetermined identification object as the identification target, the server-side identification control unit transmits, to the terminal device, a piece of individual information associated with the predetermined identification object from among the pieces of individual information stored in the memory unit.

With this configuration, the server can transmit, to the terminal device, the individual information of the identification object having been identified as the identification target.

According to an embodiment of the present invention, the terminal device further includes a display unit configured to display thereon the image captured by the image capturing unit, and the terminal-side identification control unit displays the piece of individual information from the server-side identification control unit in such a manner that the piece of individual information is superimposed on the image displayed on the display unit.

With this configuration, a user of the terminal device can recognize the individual information of the identification target.

According to an embodiment of the present invention, each of the pieces of individual information includes at least one of a piece of identification information used to identify a corresponding one of the identification objects, a piece of operation information of the corresponding one of the identification objects, and a piece of maintenance information of the corresponding one of the identification objects.

With this configuration, the user of the terminal device can recognize at least one of the identification information, the operation information, and the maintenance information of the identification target.

According to an embodiment of the present invention, each of the pieces of individual information includes a piece of defective component identification information indicating a defective component of a corresponding one of the identification objects, and, based on a piece of defective component identification information included in the piece of individual information from the server-side identification control unit, the terminal-side identification control unit displays an image of a defective component corresponding to the piece of defective component identification information in such a manner that the image of the defective component is superimposed on the image displayed on the display unit.

With this configuration, the user of the terminal device can visually recognize a defective portion.

According to an embodiment of the present invention, the feature information is model information of a corresponding one of the identification objects.

The above and other objects, features, and effects of the present invention will be apparent from the following descriptions of the embodiments and the accompanying drawings.

### Brief Description of Drawings

[FIG. 1] FIG. 1 is a view schematically illustrating a configuration of a work vehicle identification system including an object identification system according to an embodiment of the present invention.
[FIG. 2] FIG. 2 is a block diagram showing a main electric structure of a work vehicle.
[FIG. 3] FIG. 3 is a block diagram showing an electric structure of a remote monitoring server.
[FIG. 4A] FIG. 4A is a schematic view of an example of the content of a basic table.
[FIG. 4B] FIG. 4B is a schematic view of an example of the content of a to-be-replaced component table.
[FIG. 4C] FIG. 4C is a schematic view of an example of the content of a component replacement procedure table.
[FIG. 5A] FIG. 5A is a schematic view of an example of the content of an error monitoring table.
[FIG. 5B] FIG. 5B is a schematic view of an example of the content of a maintenance history management table.
[FIG. 6] FIG. 6 is a block diagram showing an electric structure of a portable terminal.
[FIG. 7] FIG. 7 is a schematic view of an example of the content of a component image table.
[FIG. 8] FIG. 8 is a flowchart showing an example of procedures for a terminal-side identification control process executed by a terminal-side identification control unit.
[FIG. 9] FIG. 9 is a flowchart showing an example of procedures for a server-side identification control process executed by a server-side identification control unit.
[FIG. 10] FIG. 10 is a schematic view for explaining a method for determining a search area.
[FIG. 11] FIG. 11 is a schematic view illustrating an example of individual information and a component image superimposed on a captured image.
[FIG. 12] FIG. 12 is a schematic view illustrating another example of individual information and a component image superimposed on a captured image.

### Description of Embodiments

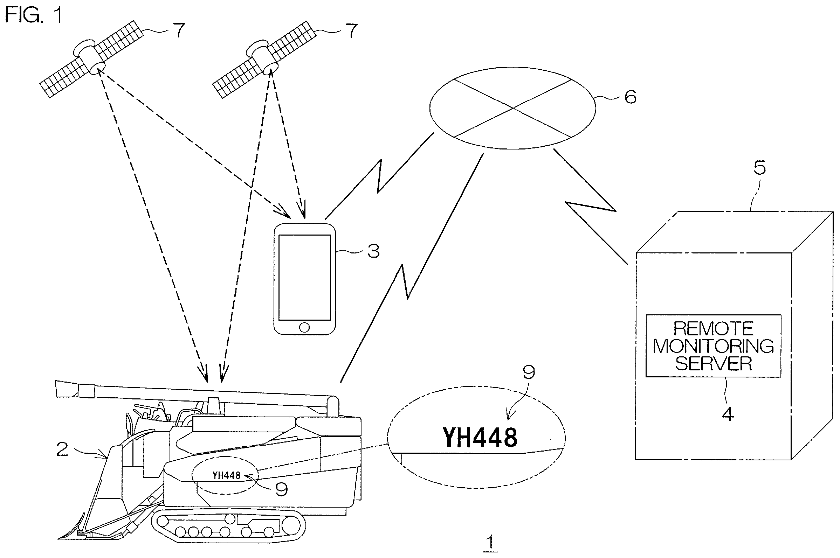

FIG. 1 is a view schematically illustrating a configuration of a work vehicle identification system including an object identification system according to an embodiment of the present invention.

A work vehicle identification system 1 is a system for identifying, at an individual level, a work vehicle 2 that is an identification object. The work vehicle identification system 1 includes a portable terminal device (hereinafter, referred to as a "terminal device 3") and a remote monitoring server 4.

The work vehicle 2 is communicable with the remote monitoring server 4 over a communication network 6. The work vehicle 2 has a function to measure its own position via a positioning satellite 7. The work vehicle 2 has a lateral side on which model information 9 indicating the model of the work vehicle 2 is exhibited. The model information 9 of the work vehicle 2 illustrated in FIG. 1 is "YH448". The model information 9 is one example of the feature information of the identification object.

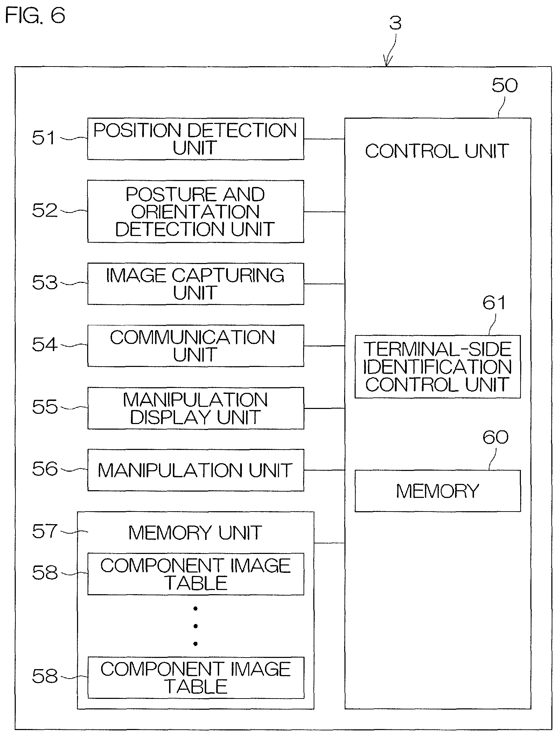

The portable terminal 3 is a portable terminal such as a smartphone or a tablet-type personal computer (tablet PC). In the present embodiment, the portable terminal 3 is a smartphone. The portable terminal 3 includes an image capturing unit 53 (see FIG. 6), such as a charge-coupled device (CCD) camera. The portable terminal 3 has a function to measure its own position via the positioning satellite 7. The portable terminal 3 has a vehicle identification/information adding program developed to implement the present embodiment. The vehicle identification/information adding program is an application program for identifying the work vehicle 2 in cooperation with the remote monitoring server 4 and adding information to a captured image through AR. Here, AR is a technique called "augmented reality", and is used to extend the real world by displaying additional information on the real world. The portable terminal 3 is communicable with the remote monitoring server 4 over the communication network 6. In this embodiment, when maintenance is conducted, the portable terminal 3 is carried by, e.g., a serviceman who is in charge of the maintenance of the work vehicle 2.

The remote monitoring server 4 is a server provided in a remote monitoring center 5 and configured to remotely monitor a plurality of work vehicles 2. The remote monitoring server 4 is communicable with the work vehicles 2 and the portable terminal 3 over the communication network 6.

The following will describe an outline of entire operation of the work vehicle identification system 1.

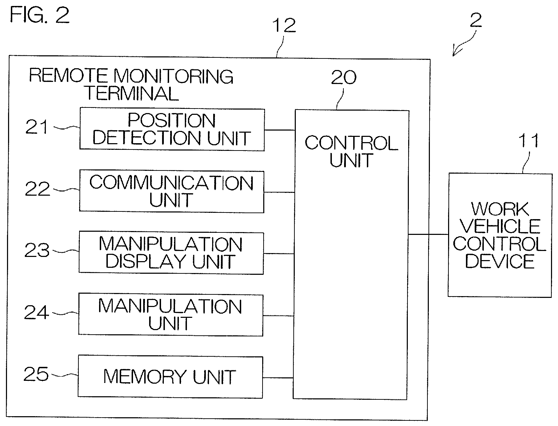

The work vehicle 2 transmits, to the remote monitoring server 4, information such as identification information, position information, operation information, and/or error detection information (abnormality information) of the work vehicle 2. In this embodiment, the identification information of the work vehicle 2 transmitted from the work vehicle 2 to the remote monitoring server 4 is a phone number of a remote monitoring terminal 12 (see FIG. 2) provided in the work vehicle 2, as will be described later. The identification information may alternatively be a machine number that is identification information uniquely allocated to the work vehicle 2.

Upon reception of the information such as the identification information, the position information, the operation information, and/or the error detection information from one of the work vehicles 2, the remote monitoring server 4 stores these pieces of information therein in association with the identification information, the model information, and the machine number of the one of the work vehicles 2. In a case where the remote monitoring server 4 has received the error detection information from the work vehicle 2, the remote monitoring server 4 notifies the serviceman of the error directly or via an operator. The serviceman who carries the portable terminal 3 goes to a place where the work vehicle 2 having the error resides. In the following description, the work vehicle 2 having the error may be referred to as an "error vehicle" occasionally.

When the serviceman arrives at the place where the error vehicle resides, the serviceman operates the portable terminal 3 to start the vehicle identification/information adding program. When the vehicle identification/information adding program is started, the image capturing unit 53 is activated. Then, the serviceman sets an image capturing direction of the portable terminal 3 toward the lateral side of the error vehicle (identification target). More specifically, the serviceman directs the portable terminal 3 toward the error vehicle to capture an image of the lateral side of the error vehicle on which the model information 9 is exhibited. Consequently, the image including the error vehicle is ready to be inputted from the image capturing unit 53 to the portable terminal 3.

The portable terminal 3 extracts the model information 9 from the input image. Then, the portable terminal 3 transmits, to the remote monitoring server 4, identification and judgment information including the extracted model information 9 and the position information of the portable terminal 3 (which may include the information indicating the posture and orientation of the portable terminal 3).

Upon reception of the identification and judgment information from the portable terminal 3, the remote monitoring server 4 determines a search area at a location close to the portable terminal 3, based on the position information included in the identification and judgment information. Next, based on the pieces of latest position information of the plurality of work vehicles 2, the remote monitoring server 4 searches for a work vehicle 2 satisfying a condition of existing within the search area and being labeled with the model identical to that indicated by the model information 9 included in the identification and judgment information. If the remote monitoring server 4 finds a work vehicle 2 satisfying the condition, the remote monitoring server 4 identifies the work vehicle 2 as the error vehicle (identification target), and transmits information (hereinafter, referred to as "individual information") about the work vehicle 2 to the portable terminal 3. Upon reception of the individual information, the portable terminal 3 displays predetermined information included in the individual information in such a manner that the predetermined information is superimposed on the input image, or displays an image (e.g., a component image) corresponding to the predetermined information included in the individual information in such a manner that the image is superimposed on the input image.

The following will describe electric structures of the work vehicle 2, the remote monitoring server 4, and the portable terminal 3.

FIG. 2 is a block diagram showing a main electric structure of the work vehicle 2.

The work vehicle 2 includes a work vehicle control device 11 and a remote monitoring terminal 12. The work vehicle control device 11 controls electric components in various parts of the work vehicle 2. In a case where the work vehicle 2 is a combine harvester, for example, the work vehicle control device 11 controls electric components in various parts of the combine harvester, such as a traveling device, a reaping device, a carrying device, and a threshing device. The work vehicle control device 11 provides the remote monitoring terminal 12 with information such as the operation information and the error detection information of the work vehicle 2. Examples of the operation information encompass an operating period, an engine speed, an exhaust gas temperature, a manipulation state of an accelerator, and a manipulation state of a brake. In this embodiment, the error detection information includes an error code indicating a type of an error.

The remote monitoring terminal 12 transmits, to the remote monitoring server 4, information such as the position information of the work vehicle 2 as well as the operation information and the error detection information supplied from the work vehicle control device 11. In this embodiment, the remote monitoring terminal 12 has a phone number for communication.

The remote monitoring terminal 12 has a control unit 20. The control unit 20 is connected to, e.g., a position detection unit 21, a communication unit 22, a manipulation display unit 23, a manipulation unit 24, and a memory unit 25. The position detection unit 21 is configured to calculate position information of the remote monitoring terminal 12 through a satellite positioning system. In this embodiment, the satellite positioning system is global navigation satellite system (GNSS). Specifically, the position detection unit 21 receives satellite signals from the plurality of positioning satellites 7 (see FIG. 1), and calculates the position information of the remote monitoring terminal 12 (work vehicle 2). The position information includes information indicative of a latitude, a longitude, and an altitude, for example.

The communication unit 22 is a communication interface via which the control unit 20 communicates with the remote monitoring server 4 over the communication network 6. The manipulation display unit 23 is made of a touch panel display, for example. The manipulation unit 24 includes one or more manipulation buttons, for example. The memory unit 25 is made of a storage device such as a nonvolatile memory.

The control unit 20 includes a microcomputer having a central processing unit (CPU) and a memory (e.g., a ROM, a RAM). The control unit 20 obtains, at every predetermined period, the position information calculated by the position detection unit 21, and stores the position information in the memory unit 25. Then, the control unit 20 transmits, at every predetermined period, the latest position information stored in the memory unit 25 to the remote monitoring server 4.

The control unit 20 accumulates, in the memory unit 25, the operation information supplied from the work vehicle control device 11. Then, at a predetermined timing (e.g., at a timing when a manipulation for turning off the power is performed), the control unit 20 transmits the operation information accumulated in the memory unit 25 to the remote monitoring server 4 in a batch. When the control unit 20 receives the error detection information from the work vehicle control device 11, the control unit 20 stores the error detection information in the memory unit 25, and transmits the error detection information to the remote monitoring server 4.

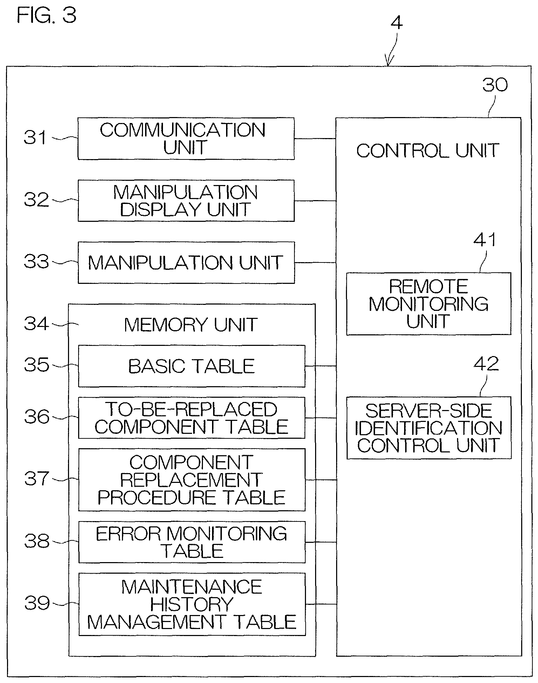

FIG. 3 is a block diagram showing an electric structure of the remote monitoring server 4.

The remote monitoring server 4 has a control unit 30. The control unit 30 is connected to, e.g., a communication unit 31, a manipulation display unit 32, a manipulation unit 33, and a memory unit 34. The communication unit 31 is a communication interface via which the control unit 30 communicates with the remote monitoring terminal 12 (work vehicle 2) and the portable terminal 3 over the communication network 6. The manipulation display unit 32 is made of a touch panel display, for example. The manipulation unit 33 includes a keyboard and/or a mouse, for example. The memory unit 34 is made of a storage device such as a hard disk and/or a nonvolatile memory.

The memory unit 34 includes, e.g., a basic table 35, a to-be-replaced component table 36, a component replacement procedure table 37, an error monitoring table 38, and a maintenance history management table 39.

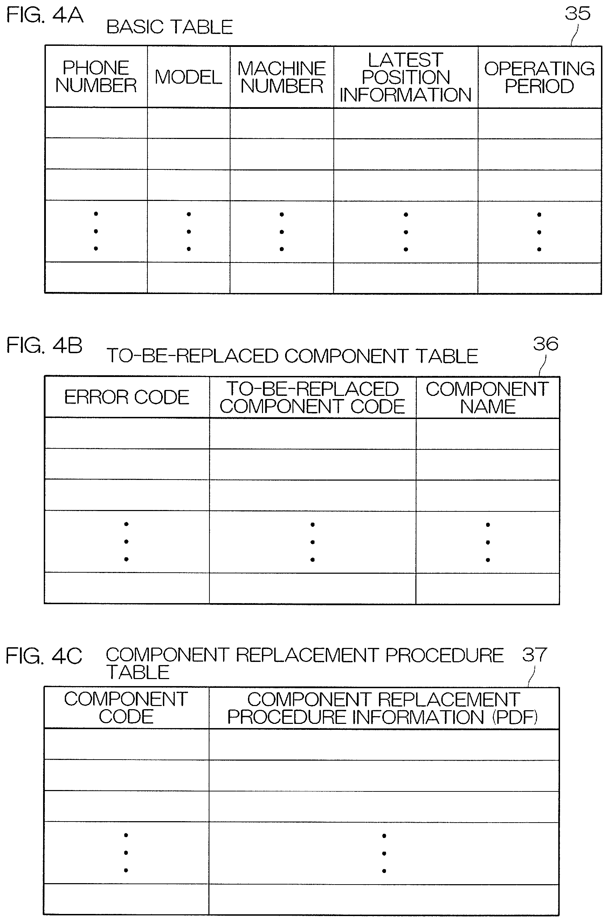

As illustrated in FIG. 4A, in the basic table 35, models, machine numbers, latest position information, operating periods, and other operation information (not illustrated) of the work vehicles 2 are stored respectively in association with the phone numbers of the remote monitoring terminals 12 of the work vehicles 2. Every time the remote monitoring server 4 receives position information and operation information from a work vehicle 2, the latest position information and the operating period of the work vehicle 2 are updated by the control unit 30.

As illustrated in FIG. 4B, in the to-be-replaced component table 36, codes (to-be-replaced component codes) and component names of components that should be replaced with new ones for the purpose of eliminating errors indicated by error codes are stored respectively in association with the error codes. The to-be-replaced component code is one example of the defective component identification information. If it is necessary to replace two or more components to eliminate an error indicated by a single error code, to-be-replaced component codes and component names of the components are stored in association with the single error code.

As illustrated in FIG. 4C, in the component replacement procedure table 37, pieces of information indicating procedures for replacing components are stored respectively in association with component codes (to-be-replaced component codes). Each of the pieces of component replacement procedure information is stored as a portable document format (PDF) file, for example.

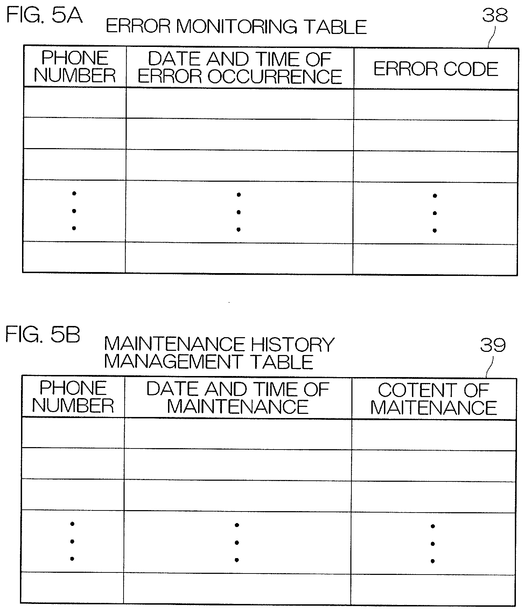

The error monitoring table 38 is a table in which information such as an error code is stored at the time when the remote monitoring server 4 receives error detection information from a work vehicle 2. Specifically, when the control unit 30 receives the error detection information from a work vehicle 2, the control unit 30 stores, in the error monitoring table 38, the phone number of the work vehicle 2, the date and time of error occurrence, and error information including an error code and/or the like, as illustrated in FIG. 5A.

The maintenance history management table 39 is a table used to manage maintenance history information. As illustrated in FIG. 5B, the maintenance history information includes the phone number of a work vehicle 2 having been subjected to maintenance, the date and time when the maintenance was performed (the date and time of the maintenance), and the content of the maintenance, for example. The maintenance history information is inputted by, e.g., an operator after the maintenance is completed, for example.

Referring back to FIG. 3, the control unit 30 includes a microcomputer having a CPU and a memory (e.g., a ROM, a RAM). The control unit 30 includes a remote monitoring unit 41 and a server-side identification control unit 42. When the remote monitoring unit 41 receives operation information from a work vehicle 2, the remote monitoring unit 41 updates the operation information included in the basic table 35, or adds the operation information into the basic table 35. When the remote monitoring unit 41 receives error detection information from a work vehicle 2, the remote monitoring unit 41 stores the error information in the error monitoring table 38, and notifies the serviceman of the content of the error directly or via the operator.

For example, when the remote monitoring unit 41 receives the error detection information, the remote monitoring unit 41 displays a warning indicating that the error detection information has been received, and/or outputs a warning sound to notify the operator that the error detection information has been received. When the operator recognizes that the error detection information has been received, the operator notifies the serviceman of the error information. Alternatively, when the remote monitoring unit 41 receives the error detection information, the remote monitoring unit 41 may create an error notifying mail including the error information and transmit the error notifying mail to a serviceman who has been designated in advance.

The server-side identification control unit 42 performs a server-side identification control process of identifying a work vehicle (identification target) whose image has been captured by the portable terminal 3 and transmitting individual information of the identified work vehicle to the portable terminal 3. The server-side identification control process will be described in detail later.

FIG. 6 is a block diagram showing an electric structure of the portable terminal 3.

The portable terminal 3 includes a control unit 50. The control unit 50 is connected to, e.g., a position detection unit 51, a posture and orientation detection unit 52, an image capturing unit 53, a communication unit 54, a manipulation display unit 55, a manipulation unit 56, and a memory unit 57. The position detection unit 51 is configured to calculate position information of the portable terminal 3 through the satellite positioning system. In this embodiment, the satellite positioning system is GNSS. Specifically, the position detection unit 51 receives satellite signals from the plurality of positioning satellites 7 (see FIG. 1), and calculates the position information of the portable terminal 3. The position information includes information indicative of a latitude, a longitude, and an altitude, for example.

The posture and orientation detection unit 52 is configured to detect the posture and orientation of the portable terminal 3. The posture of the portable terminal 3 refers to an inclination angle of the portable terminal 3 in three dimensional directions. The orientation of the portable terminal 3 refers to an image capturing direction of the image capturing unit 53. The posture and orientation detection unit 52 detects the posture and orientation of the portable terminal 3 with, e.g., a gyro sensor, an acceleration sensor, and/or a magnetic field sensor.

In the following description, terminal position information refers to information including, of the piece of information indicating the position detected by the position detection unit 51 and the pieces of information indicating the posture and orientation detected by the posture and orientation detection unit 52, at least the piece of information indicating the position. In this embodiment, the terminal position information includes all of the pieces of information indicating the position, the posture, and the orientation.

The image capturing unit 53 captures an image of the work vehicle 2 that is the identification target, e.g., with an image capturing device such as CCD or complementary metal oxide semiconductor (CMOS).

The communication unit 54 is a communication interface via which the control unit 50 communicates with the remote monitoring server 4 over the communication network 6. The manipulation display unit 55 is made of a touch panel display, for example. The manipulation unit 56 includes one or more manipulation buttons, for example. The memory unit 57 is made of a storage device such as a nonvolatile memory.

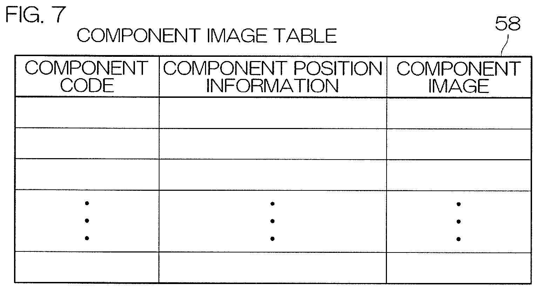

The memory unit 57 includes component image tables 58 respectively prepared for the work vehicles 2 of various models. As illustrated in FIG. 7, in each of the component image tables 58, pieces of information (component position information) indicating the positions of components included in a work vehicle 2 of a corresponding model and images (component images) of the components are stored respectively in association with component codes of the components. In this embodiment, each of the component images is a three-dimensional computer graphics (CG) image. Each of the component images may alternatively be a photographic image or a two-dimensional CG image. As will be described later, in order to clearly indicate a to-be-replaced component on the captured image, the component image is displayed in such a manner that the component image is superimposed on the captured image, for example.

The component position information is information indicating the position of the component relative to the position of the model information on the lateral side of the work vehicle 2. For example, the component position information can be xyz coordinate values in the xyz coordinate system whose origin resides at the position of the model information 9 on the lateral side of the work vehicle 2 when observed from the outside of the work vehicle 2. In this case, for example, the x-axis direction may be a front-rear direction (a direction extending laterally from the lateral side) of the vehicle, the y-axis direction may be a height direction (a direction extending along the height of the lateral side) of the vehicle, and the z-axis direction may be a left-right direction (a direction extending along the depth of the lateral side) of the vehicle.

A reference display size of a component image stored in the component image table 58 is set equal to the product of an actual component size multiplied by a predetermined factor. Similarly, coordinate values that are the component position information are also set equal to the products of the actual coordinate values of the work vehicle 2 multiplied by a predetermined factor, for example. In other words, in a case where a work vehicle scaled to a size corresponding to the product of the actual size of the work vehicle multiplied by a predetermined factor is a reference work vehicle, an absolute value of component position information (coordinate values) and a reference display size of a component image are set equal to values scaled based on the reference work vehicle.

The size of the work vehicle 2 in the image captured by the image capturing unit 53 changes according to an image capturing condition, such as a distance between the portable terminal 3 and the work vehicle 2 and a zoom magnification. Thus, in order to display a component image in such a manner that the component image is superimposed on a corresponding portion of the work vehicle in the captured image, it is necessary to convert the absolute value of the component position information and the display size of the component image into values scaled based on the size of the work vehicle in the captured image. The absolute value of the component position information and the display size of the component image can be changed in the following manner, for example. That is, with reference to the size indicated by the model information 9 of the work vehicle in the image, a ratio of the size of the work vehicle in the image with respect to the size of the reference work vehicle is calculated. Based on the ratio thus calculated, the absolute value of the component position information and the display size of the component image are scaled based on the size of the work vehicle in the image.

The control unit 50 includes a microcomputer having a CPU and a memory (e.g., a ROM, a RAM, a nonvolatile memory) 60. In the memory (specifically, a nonvolatile memory) 60, the vehicle identification/information adding program described above is stored. The control unit 50 includes a terminal-side identification control unit 61. When the vehicle identification/information adding program is started, the terminal-side identification control unit 61 executes a terminal-side identification control process according to the vehicle identification/information adding program.

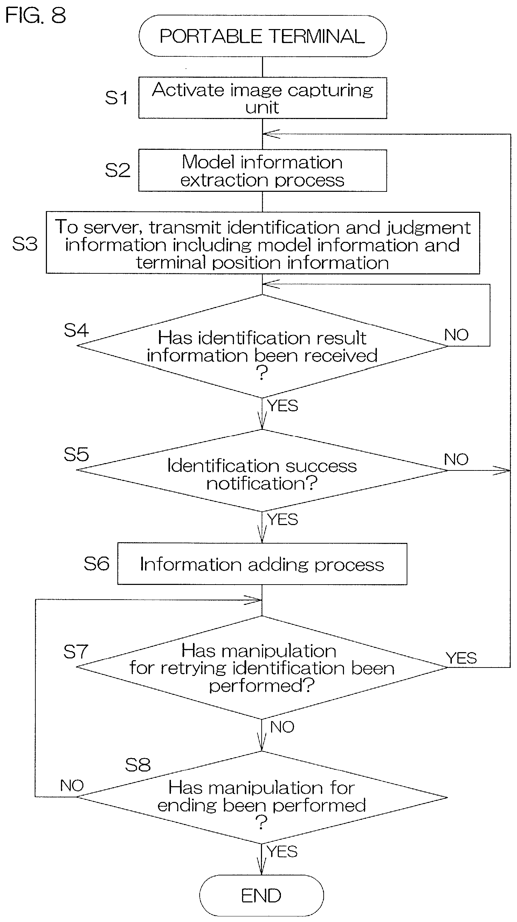

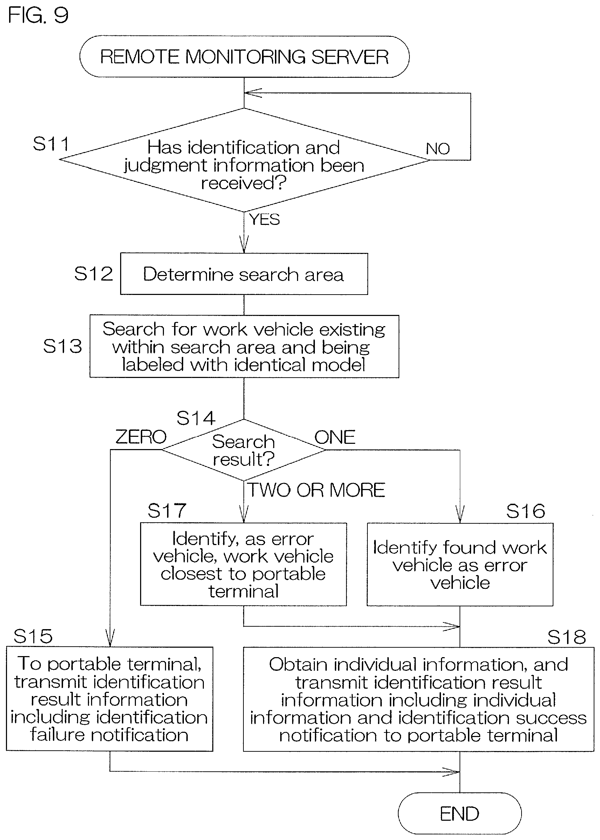

FIG. 8 is a flowchart showing an example of the procedures for the terminal-side identification control process executed by the terminal-side identification control unit 61. FIG. 9 is a flowchart showing an example of the procedures for the server-side identification control process executed by the server-side identification control unit 42.

For example, the terminal-side identification control process shown in FIG. 8 is started when the serviceman arrives at a place where a work vehicle having an error (error vehicle) resides and manipulates the portable terminal 3 to start the vehicle identification/information adding program.

When the terminal-side identification control process is started, the terminal-side identification control unit 61 activates the image capturing unit 53 (step S1). Consequently, an image is captured by the image capturing unit 53, and the captured image is displayed on the manipulation display unit 55 via the control unit 50. The captured image is inputted to the terminal-side identification control unit 61. The serviceman directs the portable terminal 3 toward the error vehicle so that an image of the lateral side of the error vehicle on which the model information 9 is exhibited can be captured.

The terminal-side identification control unit 61 executes a model information extraction process for extracting model information from the input image (step S2). The model information extraction process can be performed by a known image recognition technique.

When the model information is extracted from the input image, the terminal-side identification control unit 61 transmits, to the remote monitoring server 4, identification and judgment information including the extracted model information and the terminal position information (step S3).

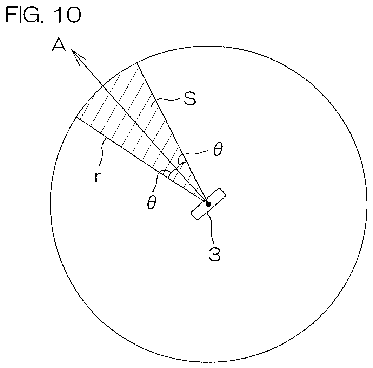

As shown in FIG. 9, when the server-side identification control unit 42 in the remote monitoring server 4 receives the identification and judgment information from the terminal-side identification control unit 61 (YES in step S11), the server-side identification control unit 42 determines a search area based on the terminal position information included in the identification and judgment information (step S12). Specifically, in a plan view as illustrated in FIG. 10, the server-side identification control unit 42 determines, as the search area, a fan-shaped area (a hatched area) S having a radius r and extending from the portable terminal 3 along the image capturing direction of the image capturing unit 53 (i.e., extending in the direction A indicated by the arrow in FIG. 10). An angle made by two radius lines of the fan-shaped area S is a center angle of the fan-shaped area S. The center angle of the fan-shaped area S is obtained in the following manner. That is, an angle θ made by one of the radius lines of the fan-shaped area S and the image capturing direction A is added to an angle θ made by the other of the radius lines of the fan-shaped area S and the image capturing direction A. The sum of these angles θ is multiplied by 2θ. The resulting product corresponds to the center angle of the fan-shaped area S. In this embodiment, the radius r is set at 30 m, and θ is set at 15 degrees. Namely, in this embodiment, the center angle of the fan-shaped area S is set at 30 degrees.

Next, based on the pieces of latest position information of the plurality of work vehicles 2 stored in the basic table 35 illustrated in FIG. 4A, the server-side identification control unit 42 searches for a work vehicle 2 satisfying a condition of existing within the search area S and being labeled with the model identical to that indicated by the model information included in the identification and judgment information (step S13).

After a predetermined period of search time, the server-side identification control unit 42 yields a determination that only one work vehicle 2 satisfying the condition has been found, two or more work vehicles 2 satisfying the condition have been found, or no work vehicle 2 satisfying the condition has been found (step S14).

If no work vehicle 2 satisfying the condition has been found, the server-side identification control unit 42 transmits, to the portable terminal 3, identification result information including an identification failure notification indicating that the error vehicle whose image has been captured by the portable terminal 3 could not be identified (step S15).

If only one work vehicle 2 satisfying the condition has been found in step S14, the server-side identification control unit 42 identifies the work vehicle 2 as the error vehicle (identification target) whose image has been captured by the portable terminal 3 (step S16). Then, the server-side identification control unit 42 advances to step S18.

If two or more work vehicles 2 satisfying the condition have been found in step S14, the server-side identification control unit 42 identifies, as the error vehicle (identification target) whose image has been captured by the portable terminal 3, one of the work vehicles 2 located closer to the portable terminal 3 than any other work vehicles 2 (step S17). Then, the server-side identification control unit 42 advances to step S18.

In step S18, based on the tables 35 to 38, the server-side identification control unit 42 obtains individual information of the work vehicle 2 having been identified as the error vehicle (identification target), and transmits, to the portable terminal 3, identification result information including the obtained individual information and an identification success notification.

Specifically, the server-side identification control unit 42 obtains, from the basic table 35 illustrated in FIG. 4A, information such as the model, machine number, and/or operating period of the work vehicle 2 having been identified as the error vehicle. The server-side identification control unit 42 also obtains, from the error monitoring table 38 illustrated in FIG. 5A, an error code indicating the cause of an error currently occurring in the work vehicle 2 having been identified as the error vehicle. In addition, the server-side identification control unit 42 obtains, from the to-be-replaced component table 36 illustrated in FIG. 4B, a to-be-replaced component code(s) and a component name(s) associated with the error code obtained from the error monitoring table 38. Furthermore, the server-side identification control unit 42 obtains, from the component replacement procedure table 37 illustrated in FIG. 4C, component replacement procedure information associated with the to-be-replaced component code(s) obtained from the to-be-replaced component table 36. Then, the server-side identification control unit 42 transmits, to the portable terminal 3, identification result information including the individual information obtained from the tables 35 to 38 (the model, the machine number, the operating period, the error code, the to-be-replaced component code(s) and the component name(s), the component replacement procedure information, and/or the like) and the identification success notification.

Referring back to FIG. 8, when the portable-terminal-side identification control unit 61 in the portable terminal 3 receives the identification result information from the remote monitoring server 4 (YES in step S4), the terminal-side identification control unit 61 determines whether or not the notification included in the identification result information is an identification success notification (step S5). If the notification included in the identification result information is an identification failure notification (NO in step S5), the terminal-side identification control unit 61 returns to step S2.

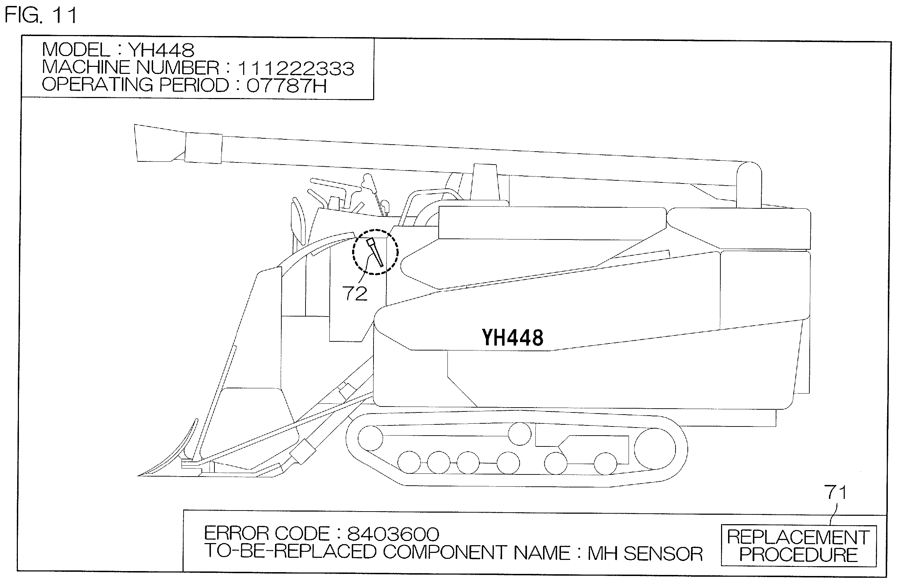

If the notification included in the identification result information is an identification success notification (YES in step S5), the terminal-side identification control unit 61 executes an information adding process (step S6). Specifically, as illustrated in FIG. 11, the terminal-side identification control unit 61 displays the model, machine number, operating period included in the identification result information in such a manner that these pieces of information are superimposed on the captured image. As illustrated in FIG. 11, the terminal-side identification control unit 61 also displays the error code and to-be-replaced component name(s) included in the identification result information and a replacement procedure button 71 in such a manner that the error code, the to-be-replaced component name(s), and the replacement procedure button 71 are superimposed on the captured image. In this example, the to-be-replaced component name is an MH sensor. Instead of or in addition to the to-be-replaced component name, a to-be-replaced component code may be displayed. If the serviceman presses the replacement procedure button 71, the component replacement procedure information included in the identification result information is displayed.

In addition, based on the model and to-be-replaced component code (in this example, the component name corresponding to the code is the MH sensor) included in the identification result information, the terminal-side identification control unit 61 obtains, from the component image table associated with the model, component position information and a component image corresponding to the to-be-replaced component code. Next, as described above, the terminal-side identification control unit 61 adjusts the absolute value of the component position information and the display size of the component image based on the size indicated by the model information 9 extracted from the captured image. Then, as indicated by the component image 72 within the broken line in FIG. 11, the terminal-side identification control unit 61 displays the component image in such a manner that the component image is superimposed on the captured image at a location indicated by the adjusted component position information and at the adjusted display size. Although not illustrated in FIG. 11, an enlarged image of a small area including the model information 9 of the work vehicle 2 may be displayed at a predetermined area (e.g., at a corner) in the image, for the purpose of notifying a user of the location based on which the identification and determination are performed.

Thereafter, the terminal-side identification control unit 61 determines whether or not the serviceman has performed a manipulation for retrying the identification of the error vehicle (step S7). Although not illustrated in FIG. 11, the terminal-side identification control unit 61 may display, on its display screen, an identification retry button, for example. If the identification retry button is manipulated by the serviceman, the terminal-side identification control unit 61 may determine that the manipulation for retrying the identification of the error vehicle has been performed.

If the manipulation for retrying the identification of the error vehicle has not been performed (NO in step S7), the terminal-side identification control unit 61 determines whether or not the serviceman has performed a manipulation for ending the vehicle identification/information adding program (step S8). If the manipulation for ending the vehicle identification/information adding program has not been performed (NO in step S8), the terminal-side identification control unit 61 returns to step S7.

If it is determined in step S7 that the manipulation for retrying the identification of the error vehicle has been performed (YES in step S7), the terminal-side identification control unit 61 returns to step S2. Accordingly, the processes of step S2 and the subsequent steps will be executed again.

If it is determined in step S8 that the manipulation for ending the vehicle identification/information adding program has been performed (YES in step S8), the terminal-side identification control unit 61 ends the terminal-side identification control process.

In the embodiment described above, an image of a work vehicle 2 that is an identification target is captured by the portable terminal 3, and model information of the identification target is extracted therefrom. Then, identification and judgment information including the model information of the identification target and the terminal position information of the portable terminal 3 is transmitted to the remote monitoring server 4. The remote monitoring server 4 determines a search area S based on the terminal position information, and searches for a work vehicle 2 satisfying a condition of existing within the determined search area S and being labeled with the model identical to that indicated by the model information of the identification target. If a work vehicle 2 satisfying the condition has been found, the work vehicle 2 is identified as the identification target. Consequently, even in a case where there exists a plurality of work vehicles 2 including two or more work vehicles 2 having the identical model information, it is possible to identify an identification target at an individual level by capturing an image of the identification target with the portable terminal 3.

In addition, according to the embodiment described above, it is possible to display the individual information of the identification target, such as the model, the machine number, the operating period, the error code, the to-be-replaced component name, and/or the component replacement procedure information of the identification target, in such a manner that the individual information is superimposed on the captured image of the portable terminal 3. Consequently, the user (in the example in the embodiment described above, the serviceman) of the portable terminal 3 can recognize the individual information of the identification target, such as the model, the machine number, the operating period, the error code, the to-be-replaced component name, and/or the component replacement procedure information of the identification target.

In addition, according to the embodiment described above, it is possible to display the component image corresponding to the to-be-replaced component code included in the individual information in such a manner that the component image is superimposed on a corresponding portion of the image captured by the portable terminal 3. Consequently, the user (in the example in the embodiment described above, the serviceman) of the portable terminal 3 can visually recognize the defective portion.

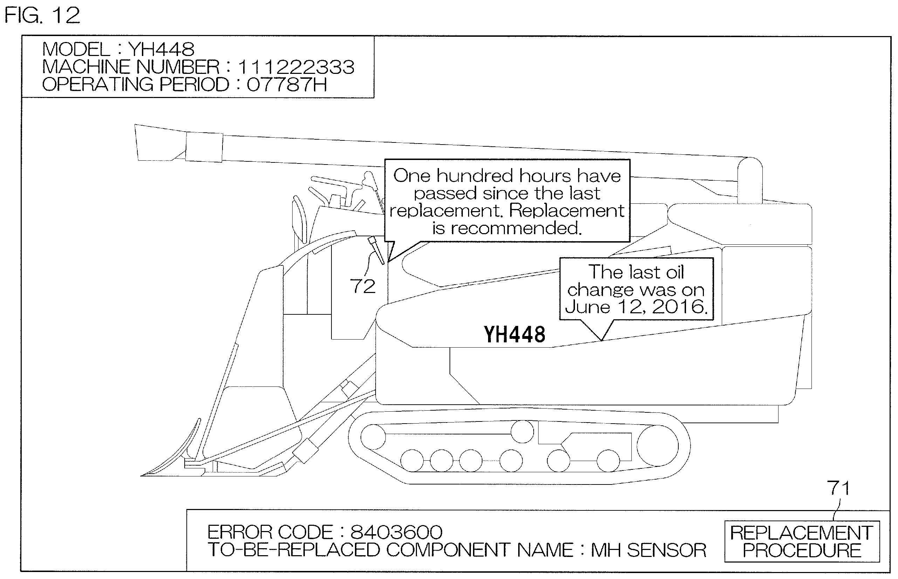

The foregoing has explained the embodiments of the present invention. However, the present invention can also be implemented in other various modes. For example, in the information adding process in step S6 shown in FIG. 8, the portable terminal 3 may display information related to the maintenance in such a manner that the information is superimposed on the captured image, as illustrated in FIG. 12. In this example, the MH sensor (the component image 72) is not defective, but is an object that is recommended to be replaced. In the example shown in FIG. 12, for the component image 72 of the MH sensor, the following messages are superimposed on the captured image and displayed: "One hundred hours have passed since the last replacement. Replacement is recommended." and "The last oil change was on June 12, 2016." In step S18 shown in FIG. 9, such messages can be created by the remote monitoring server 4 based on the maintenance history management table 39 (see FIG. 5B), and can be incorporated into the identification result information as individual information. Then, these messages can be transmitted to the portable terminal 3. In FIG. 12, the replacement recommended component is treated in a similar manner to the to-be-replaced component described above. Thus, the error code, the to-be-replaced component name, and the replacement procedure button 71 are displayed therefor in a similar manner to those in FIG. 11.

For another example, the remote monitoring server 4 may create, as individual information, a maintenance recommendation message or the like based on an estimation performed with various detection values from the identification target 2, and incorporates the maintenance recommendation message or the like into the individual information. Consequently, the maintenance recommendation message can be displayed on the portable terminal 3. For example, the maintenance recommendation message can be as below: "The value of the loss sensor is high. Inspection of the loss sensor is recommended."

In the embodiment described above, the portable terminal 3 transmits, to the remote monitoring server 4, the terminal position information including the pieces of information indicating the position, posture, and orientation as well as the identification and judgment information including the model information. However, of the pieces of information indicating the position, posture, and orientation, the terminal position information only needs to include the position information. For example, if the terminal position information includes the information indicating the position but does not include the information indicating the posture and orientation, the remote monitoring server 4 determines a search area S shaped in a circular area that is centered on the portable terminal 3 and that has a predetermined radius in a plan view.

In the embodiment described above, the positioning system employed by each of the remote monitoring terminal 12 of the work vehicle 2 and the portable terminal 3 is GNSS, which is a point positioning system. Alternatively, the remote monitoring terminal 12 and the portable terminal 3 may employ a positioning system that is not the point positioning system, such as real time kinematic-GNSS (RTK-GNSS).

In the above embodiments, the description has been given of the combine harvester as one example of the work vehicle, which is the identification target. Instead of the combine harvester, the work vehicle that is the identification target may be a tractor, a rice transplanter, a civil engineering and construction work machine, a snowplow, a riding-type working machine, a walking-type work machine, or the like.

In addition, in the above embodiments, the description has been given of the work vehicle as one example of the identification object. Alternatively, the identification object may be an object that is not the work vehicle.

In addition to those described above, various design modifications can be given within the scope of the claims.

The embodiments of the present invention have been described in detail. However, these embodiments have been described merely by way of specific examples in order to clearly illustrate the techniques of the present invention, and therefore the present invention should not be limited to the specific examples. The scope of the present invention is limited only by the appended claims.

### Reference Signs List

1 work vehicle identification system
2 work vehicle
3 terminal device (portable terminal)
4 remote monitoring server
**11** work vehicle control device
12 remote monitoring terminal
30 control unit
31 communication unit
32 manipulation display unit
33 manipulation unit
34 memory unit
35 basic table
36 to-be-replaced component table
37 component replacement procedure table
38 error monitoring table
39 maintenance history management table
41 remote monitoring unit
42 server-side identification control unit
50 control unit
51 position detection unit
52 posture and orientation detection unit
53 image capturing unit
54 communication unit
55 manipulation display unit
57 memory unit
58 component image table
61 terminal-side identification control unit

## Claims

1. A work vehicle identification system comprising:
at least one work vehicle (2) exhibiting model information (9) indicating the model of the work vehicle (2),
a terminal device (3) capable of capturing an image of a target vehicle that is a work vehicle to be identified from among work vehicles (2); and
a server (4) communicable with the terminal device (3) and with the work vehicle (2), wherein
the terminal device (3) includes
a detecting unit (51) configured to detect terminal position information including information indicating a position of the terminal device,
an image capturing unit (53) configured to capture an image of the target vehicle, said image including the model information (9),
a posture and orientation detection unit (52) configured to detect the posture and orientation of the terminal device (3), and
a terminal-side identification control unit (61) configured to extract model information (9) of the target vehicle from the image captured by the image capturing unit (53), and to transmit, to the server, identification and judgment information including:
- the model information (9) thus extracted,
- the posture and orientation of the terminal device (3) and
- the terminal position information, and
the work vehicle (2) includes
a vehicle position detection unit (21) configured to detect work vehicle position information including information indicating a position of the work vehicle (2),
a vehicle communication unit (22) configured to transmit the work vehicle position information to the server,
the server (4) includes
a memory unit (34) in which pieces of model information (9), pieces of position information of the work vehicles (2), and pieces of individual information of the work vehicles are stored respectively in association with the work vehicles, and
a server-side identification control unit (42) configured to determine a search area (S) based on the terminal position information and the posture and orientation of the terminal device (3) included in the identification and judgment information received from the terminal device (3), to search for a predetermined work vehicle satisfying a condition of existing within the search area (S) thus determined and having model information (9) identical to the model information (9) included in the identification and judgment information, and to identify, when a predetermined work vehicle satisfying the condition is found as a result of the search, the predetermined work vehicle as the target vehicle,
in a case where the server-side identification control unit (42) identifies the predetermined work vehicle as the target vehicle, the server-side identification control unit (42) is configured to transmit, to the terminal device (3), a piece of individual information associated with the target vehicle from among the pieces of individual information stored in the memory unit (34),
wherein the terminal device (3) further includes a display unit (32) configured to display thereon the image captured by the image capturing unit (53), and
the terminal-side identification control unit (61) is configured to display the piece of individual information from the server-side identification control unit (42) in such a manner that the piece of individual information is superimposed on the image displayed on the display unit (32),
and wherein if no work vehicle satisfying the condition has been found, the server-side identification control unit (42) is configured to transmit, to the terminal device (3), identification result information including an identification failure notification indicating that the target vehicle whose image has been captured by the terminal device could not be identified.

2. The work vehicle identification system according to claim 1, wherein
in a case where there exist two or more predetermined work vehicles satisfying the condition, the server-side identification control unit (42) identifies, as the target vehicle, the predetermined work vehicle located closer to the terminal device (3) than any other predetermined work vehicle.

3. The work vehicle identification system according to claim 1, wherein
each of the pieces of individual information includes at least one of a piece of identification information used to identify a corresponding one of the work vehicles, a piece of operation information of the corresponding one of the work vehicles, and a piece of maintenance information of the corresponding one of the work vehicles.

4. The work vehicle identification system according to claim 1, wherein
each of the pieces of individual information includes a piece of defective component identification information indicating a defective component of a corresponding one of the work vehicles, and
based on a piece of defective component identification information included in the piece of individual information from the server-side identification control unit (42), the terminal-side identification control unit (61) displays an image of a defective component corresponding to the piece of defective component identification information in such a manner that the image of the defective component is superimposed on the image displayed on the display unit (32).

## Patentansprüche

1. Arbeitsfahrzeug-Identifizierungssystem, umfassend:
mindestens ein Arbeitsfahrzeug (2), das eine Modellinformation (9) aufweist, die das Modell des Arbeitsfahrzeugs (2) angibt,
ein Endgerät (3), das in der Lage ist, ein Bild eines Zielfahrzeugs aufzunehmen, das ein Arbeitsfahrzeug ist, das unter Arbeitsfahrzeugen (2) zu identifizieren ist; und
einen Server (4), der mit dem Endgerät (3) und mit dem Arbeitsfahrzeug (2) kommunizierbar ist,
wobei
das Endgerät (3) umfasst:
eine Erfassungseinheit (51), die konfiguriert ist, Endgerät-Positionsinformationen zu erfassen, die Informationen umfassen, die eine Position des Endgeräts angeben,
eine Bildaufnahmeeinheit (53), die konfiguriert ist, ein Bild des Zielfahrzeugs aufzunehmen, wobei das Bild die Modellinformation (9) umfasst,
eine Lage- und Orientierungserfassungseinheit (52), die konfiguriert ist, die Lage und Orientierung des Endgeräts (3) zu erfassen, und
eine endgerätseitige Identifizierungssteuereinheit (61), die konfiguriert ist, die Modellinformation (9) des Zielfahrzeugs aus dem durch die Bildaufnahmeeinheit (53) aufgenommenen Bild zu extrahieren und an den Server Identifizierungs- und Beurteilungsinformationen zu übermitteln, umfassend:
- die so extrahierte Modellinformation (9),
- die Lage und Orientierung des Endgeräts (3) und
- die Endgerät-Positionsinformationen, und
das Arbeitsfahrzeug (2) umfasst:
eine Fahrzeug-Positionserfassungseinheit (21), die konfiguriert ist, Arbeitsfahrzeug-Positionsinformationen zu erfassen, die Informationen umfassen, die eine Position des Arbeitsfahrzeugs (2) angeben,
eine Fahrzeug-Kommunikationseinheit (22), die konfiguriert ist, die Arbeitsfahrzeug-Positionsinformationen an den Server zu übermitteln,
der Server (4) umfasst:
eine Speichereinheit (34), in der Modellinformationselemente (9), Positionsinformationselemente der Arbeitsfahrzeuge (2) und Einzelinformationselemente der Arbeitsfahrzeuge jeweils in Zuordnung zu den Arbeitsfahrzeugen gespeichert sind, und
eine serverseitige Identifizierungssteuereinheit (42), die konfiguriert ist, auf der Grundlage der Endgerät-Positionsinformationen und der Lage und Orientierung des Endgeräts (3), die in den vom Endgerät (3) empfangenen Identifizierungs- und Beurteilungsinformationen enthalten sind, einen Suchbereich (S) zu bestimmen, nach einem vorbestimmten Arbeitsfahrzeug zu suchen, das eine Bedingung des Vorhandenseins innerhalb des so bestimmten Suchbereichs (S) erfüllt und eine Modellinformation (9) aufweist, die identisch mit der in den Identifizierungs- und Beurteilungsinformationen enthaltenen Modellinformation (9) ist, und, wenn ein vorbestimmtes Arbeitsfahrzeug, das die Bedingung erfüllt, als Ergebnis der Suche gefunden wird, das vorbestimmte Arbeitsfahrzeug als das Zielfahrzeug zu identifizieren,
wobei in einem Fall, in dem die serverseitige Identifizierungssteuereinheit (42) das vorbestimmte Arbeitsfahrzeug als das Zielfahrzeug identifiziert, die serverseitige Identifizierungssteuereinheit (42) konfiguriert ist, an das Endgerät (3) ein dem Zielfahrzeug zugeordnetes Einzelinformationselement zu übermitteln
aus den in der Speichereinheit (34) gespeicherten Einzelinformationselementen,
wobei das Endgerät (3) ferner eine Anzeigeeinheit (32) umfasst, die konfiguriert ist, darauf das durch die Bildaufnahmeeinheit (53) aufgenommene Bild anzuzeigen, und
die endgerätseitige Identifizierungssteuereinheit (61) konfiguriert ist, das Einzelinformationselement von der serverseitigen Identifizierungssteuereinheit (42) derart anzuzeigen, dass das Einzelinformationselement auf dem auf der Anzeigeeinheit (32) angezeigten Bild überlagert wird,
und wobei, wenn kein Arbeitsfahrzeug, das die Bedingung erfüllt, gefunden worden ist, die serverseitige Identifizierungssteuereinheit (42) konfiguriert ist, an das Endgerät (3) Identifizierungsergebnisinformationen zu übermitteln, die eine Identifizierungsfehlerbenachrichtigung umfassen, die angibt, dass das Zielfahrzeug, dessen Bild durch das Endgerät aufgenommen worden ist, nicht identifiziert werden konnte.

2. Arbeitsfahrzeug-Identifizierungssystem nach Anspruch 1, wobei
in einem Fall, in dem zwei oder mehr vorbestimmte Arbeitsfahrzeuge, die die Bedingung erfüllen, vorhanden sind, die serverseitige Identifizierungssteuereinheit (42) als das Zielfahrzeug dasjenige vorbestimmte Arbeitsfahrzeug identifiziert, das näher am Endgerät (3) gelegen ist als jedes andere vorbestimmte Arbeitsfahrzeug.

3. Arbeitsfahrzeug-Identifizierungssystem nach Anspruch 1, wobei
jedes der Einzelinformationselemente mindestens ein Identifizierungsinformationselement, das zur Identifizierung eines entsprechenden Arbeitsfahrzeugs unter den Arbeitsfahrzeugen verwendet wird, ein Betriebsinformationselement des entsprechenden Arbeitsfahrzeugs unter den Arbeitsfahrzeugen und ein Wartungsinformationselement des entsprechenden Arbeitsfahrzeugs unter den Arbeitsfahrzeugen umfasst.

4. Arbeitsfahrzeug-Identifizierungssystem nach Anspruch 1, wobei
jedes der Einzelinformationselemente ein Identifizierungsinformationselement für defekte Komponenten umfasst, das eine defekte Komponente eines entsprechenden Arbeitsfahrzeugs unter den Arbeitsfahrzeugen angibt, und
auf der Grundlage eines in dem Einzelinformationselement von der serverseitigen Identifizierungssteuereinheit (42) enthaltenen Identifizierungsinformationselements für defekte Komponenten die endgerätseitige Identifizierungssteuereinheit (61) ein Bild einer defekten Komponente entsprechend dem Identifizierungsinformationselement für defekte Komponenten derart anzeigt, dass das Bild der defekten Komponente auf dem auf der Anzeigeeinheit (32) angezeigten Bild überlagert wird.

## Revendications

1. Système d'identification de véhicule de travail comprenant :
au moins un véhicule de travail (2) exhibant une information de modèle (9) indiquant le modèle du véhicule de travail (2),
un dispositif terminal (3) capable de capturer une image d'un véhicule cible qui est un véhicule de travail à identifier parmi des véhicules de travail (2) ; et
un serveur (4) communicable avec le dispositif terminal (3) et avec le véhicule de travail (2),
dans lequel
le dispositif terminal (3) comprend
une unité de détection (51) configurée pour détecter des informations de position terminale comprenant des informations indiquant une position du dispositif terminal,
une unité de capture d'image (53) configurée pour capturer une image du véhicule cible, ladite image comprenant l'information de modèle (9),
une unité de détection de posture et d'orientation (52) configurée pour détecter la posture et l'orientation du dispositif terminal (3), et
une unité de commande d'identification côté terminal (61) configurée pour extraire l'information de modèle (9) du véhicule cible à partir de l'image capturée par l'unité de capture d'image (53), et pour transmettre, au serveur, des informations d'identification et de jugement comprenant :
- l'information de modèle (9) ainsi extraite,
- la posture et l'orientation du dispositif terminal (3) et
- les informations de position terminale, et
le véhicule de travail (2) comprend
une unité de détection de position de véhicule (21) configurée pour détecter des informations de position du véhicule de travail comprenant des informations indiquant une position du véhicule de travail (2),
une unité de communication de véhicule (22) configurée pour transmettre les informations de position du véhicule de travail au serveur,
le serveur (4) comprend
une unité de mémoire (34) dans laquelle des éléments d'information de modèle (9), des éléments d'information de position des véhicules de travail (2), et des éléments d'information individuelle des véhicules de travail sont stockés respectivement en association avec les véhicules de travail, et
une unité de commande d'identification côté serveur (42) configurée pour déterminer une zone de recherche (S) sur la base des informations de position terminale et de la posture et de l'orientation du dispositif terminal (3) comprises dans les informations d'identification et de jugement reçues du dispositif terminal (3), pour rechercher un véhicule de travail prédéterminé satisfaisant une condition d'existence dans la zone de recherche (S) ainsi déterminée et présentant une information de modèle (9) identique à l'information de modèle (9) comprise dans les informations d'identification et de jugement, et pour identifier, lorsqu'un véhicule de travail prédéterminé satisfaisant la condition est trouvé à la suite de la recherche, le véhicule de travail prédéterminé en tant que véhicule cible,
dans un cas où l'unité de commande d'identification côté serveur (42) identifie le véhicule de travail prédéterminé en tant que véhicule cible, l'unité de commande d'identification côté serveur (42) est configurée pour transmettre, au dispositif terminal (3), un élément d'information individuelle associé au véhicule cible
parmi les éléments d'information individuelle stockés dans l'unité de mémoire (34),
dans lequel le dispositif terminal (3) comprend en outre une unité d'affichage (32) configurée pour afficher sur celle-ci l'image capturée par l'unité de capture d'image (53), et
l'unité de commande d'identification côté terminal (61) est configurée pour afficher l'élément d'information individuelle provenant de l'unité de commande d'identification côté serveur (42) de telle manière que l'élément d'information individuelle est superposé sur l'image affichée sur l'unité d'affichage (32),
et dans lequel, si aucun véhicule de travail satisfaisant la condition n'a été trouvé, l'unité de commande d'identification côté serveur (42) est configurée pour transmettre, au dispositif terminal (3), des informations de résultat d'identification comprenant une notification d'échec d'identification indiquant que le véhicule cible dont l'image a été capturée par le dispositif terminal n'a pas pu être identifié.

2. Système d'identification de véhicule de travail selon la revendication 1, dans lequel
dans un cas où il existe deux ou plus de deux véhicules de travail prédéterminés satisfaisant la condition, l'unité de commande d'identification côté serveur (42) identifie, en tant que véhicule cible, le véhicule de travail prédéterminé situé plus près du dispositif terminal (3) que tout autre véhicule de travail prédéterminé.

3. Système d'identification de véhicule de travail selon la revendication 1, dans lequel
chacun des éléments d'information individuelle comprend au moins un élément d'information d'identification utilisé pour identifier un véhicule de travail correspondant parmi les véhicules de travail, un élément d'information de fonctionnement du véhicule de travail correspondant parmi les véhicules de travail, et un élément d'information de maintenance du véhicule de travail correspondant parmi les véhicules de travail.

4. Système d'identification de véhicule de travail selon la revendication 1, dans lequel
chacun des éléments d'information individuelle comprend un élément d'information d'identification de composant défectueux indiquant un composant défectueux d'un véhicule de travail correspondant parmi les véhicules de travail, et
sur la base d'un élément d'information d'identification de composant défectueux compris dans l'élément d'information individuelle provenant de l'unité de commande d'identification côté serveur (42), l'unité de commande d'identification côté terminal (61) affiche une image d'un composant défectueux correspondant à l'élément d'information d'identification de composant défectueux de telle manière que l'image du composant défectueux est superposée sur l'image affichée sur l'unité d'affichage (32).
